# EUROPEAN PATENT APPLICATION

(11) **EP 4 730 735 A1**
(43) Date of publication of application: **22.04.2026**
(21) Application number: 25205354.1
(22) Date of filing: 29.09.2025
(51) Int. Cl.: H04L 41/0894, H04W 24/02, H04W 24/04, H04L 41/0895

(54) **CONFLICT MANAGEMENT OF NON-REALTIME RAN INTELLIGENT CONTROLLER (RIC) AND OTHER OPTIMIZATION SYSTEMS**

(30) Priority: 21.10.2024 GR 20240100741; 04.06.2025 US 202519228220
(71) Applicant: Juniper Networks, Inc., Sunnyvale, CA 94089-1206 (US)
(72) Inventor: AKMAN, Arda, Sunnyvale, 94089 (US); SAHIN, Burcu, Sunnyvale, 94089 (US); GRIVA, Pagona, Sunnyvale, 94089 (US); BORDELEAU, Marc-Andre, Sunnyvale, 94089 (US); POLYCHRONOPOULOS, Constantine Dimitrios, Sunnyvale, 94089 (US)
(74) Representative: D Young & Co LLP

(57) **Abstract**

An example computing system includes a Radio Access Network (RAN) Intelligent Controller (RIC). The RIC includes storage media configured to store configuration update information. The configuration update information includes one or more configuration parameters and is indicative of a change in the one or more configuration parameters by an application of the RIC. The RIC includes a conflict manager. The conflict manager is configured to determine, based on the configuration update information that a first parameter associated with the one or more configuration parameters has been previously updated. The conflict manager is configured to determine, based on the first parameter being previously updated, a conflict. The conflict manager is configured to apply, based on determining the conflict, a policy to determine to update the one or more configuration parameters and update the one or more configuration parameters in accordance with the policy.

## Description

This application claims the benefit of US Patent Application No. 19/228,220, filed 4 June 2025 and claims the benefit of GR Patent Application No. 20240100741, filed 21 October 2024; the entire content of each application is incorporated herein by reference.

### TECHNICAL FIELD

The disclosure relates to computer networking, and more specifically to conflict management and mitigation in a mobile network.

### BACKGROUND

Computer networks have become ubiquitous, and the number of network applications, network-connected devices, and types of network-connected devices are rapidly expanding. Such devices now include computers, smartphones, Internet-of-Things (IoT) devices, vehicles, medical devices factory equipment, etc. Fifth generation (5G) mobile network architectures enhanced the ability to provide communication services using cloud-based network function virtualization (NFV). Specialized networks can be created using the Radio Access Network (RAN) of a mobile network operator combined with functions of a 5G core. For example, networks can be created for a specific service level agreement (SLA), special use cases, or other specific requirements. Examples of such networks include private mobile networks, industrial networks, a dedicated network for connected vehicles, etc.

### SUMMARY

Particular aspects are set out in the appended independent claims. Various optional embodiments are set out in the dependent claims. In general, the disclosure describes techniques for a conflict management and mitigation framework for a RAN Intelligent Controller (RIC) for a RAN of a mobile network and at least one other system (e.g., a non-Open-RAN or non-O-RAN system). The RIC includes or implements optimization algorithms in accordance with an Open-RAN (O-RAN) system, e.g. with an application like an rApp. The at least one other system may include a legacy system like a centralized self-organizing network (C-SON), a distributed self-organizing network (D-SON), or any other system that may attempt to optimize configuration parameters of a RAN automatically or manually. Because network operators may desire to slowly migrate their networks from legacy systems to O-RAN systems, non-O-RAN systems and O-RAN systems may operate within the same networks, creating potential for conflicts for configuration parameters sought to be optimized with different values by these different systems.

A C-SON may be configured to understand topology, loads, neighborhood relationships, and the like for a group of base stations and may optimize configuration parameters across that group of base stations. However, a C-SON may take a relatively long period of time to implement any optimized configuration parameters. A D-SON may be configured to optimize configuration parameters for a single base station. While a D-SON may be more limited in the scope of changes to configuration parameters that may be made, the D-SON may make such changes more quickly than a C-SON.

Because a network operator may use C-SON, D-SON, and/or other systems to attempt to optimize configuration parameters of a RAN, the addition of an O-RAN RIC, which may also include applications to optimize configuration parameters of the RAN, may inherently cause conflicts that should be managed. It should be noted that systems, such as C-SON, D-SON, and/or other systems may not be configured according to the O-RAN standard, which may complicate conflict management and mitigation.

RAN conflict management and mitigation is a challenging problem, and there are no easy, apparent, and/or standards-defined solutions, enabling or requiring vendors to come up with differentiated solutions. Conflict management and mitigation has been a common problem since the introduction of different optimization algorithms (such as Self-Organizing Network (SON) algorithms) without good solutions, and the issue is getting ever more complex with the O-RAN RIC architecture, the overlap of O-RAN RIC systems and SON systems, and the simultaneous existence and execution of multiple vendor applications (e.g., r/xApps). Moreover, as network operators onboard O-RAN systems, such as non-real-time (non-RT) RICs, the network operators may continue to operate other systems, such as C-SON or D-SON systems for optimizing network configuration, rather than upgrade a network all at once to be compatible with O-RAN. As such, not only may conflicts arise between different rApps attempting to change configuration parameters of the RAN, conflicts may also arise between legacy equipment and rApps attempting to change configuration parameters. A need for managing such conflicts exists.

This disclosure describes a conflict management and mitigation framework and techniques that enable a non-RT RIC to gather information about optimization actions (e.g., configuration changes) made both by non-O-RAN system(s) and one or more rApps so the non-RT RIC can detect and/or mitigate conflicts arising between actions of the non-O-RAN system(s) and the one or more rApps. Additionally, the techniques of this disclosure include a new service that may be exposed by a non-RT RIC so external entities can check for potential conflicts with non-RT RIC/rApps through an open interface, such as an O-RAN service management and exposure (SME) interface or a well-defined representational state transfer (REST) application programming interface (API) set.

The conflict management and mitigation framework described herein allows a conflict manager to subscribe to signals stored by the RIC. The conflict manager may be a component of Service Management and Orchestration (SMO) frameworks and/or non-RT RICs, for various enterprises, mobile network operators, or providers associated with the RAN managed by the RIC. The conflict manager may also be, or alternatively be, a separate application associated with various third parties, which may also be enterprises, mobile network operators, or providers. The conflict manager may also be, or alternatively be, an application of the RIC platform (e.g., an rApp). The conflict manager may implement an artificial intelligence (AI)-based and/or machine learning (ML)-based approach to conflict management and mitigation. The RIC stores signals, which can include messages communicated via interfaces; events reported via interfaces; and/or actions directed and optionally reported via the interfaces, where the interfaces may include, for examples, the O1, A1, O2, and E2 interfaces. The RIC may store such signals in association with network state information representative of the state of the mobile network at the time of a signal.

The conflict manager subscribes to the RIC to obtain signals (and optionally associated network state information) determined as useful for conflict management and mitigation. Based on the obtained data, the conflict manager may identify conflicts. The conflict manager may then provide feedback and/or direct or otherwise communicate with the RIC to mitigate and/or manage the identified conflicts.

The techniques provide one or more technical advantages that realize one or more practical applications. For example, the techniques may enable a dynamic and flexible approach to conflict mitigation and management that permits slow migration from legacy technologies to newer, O-RAN based technologies, while managing conflicts between the legacy systems and the RIC (including rApps), thereby providing a conflict management and/or mitigation service across different technologies and thereby improving network operation by reducing one or more of resource contention, race conditions, or coherency issues that can otherwise result where conflicts among disparate systems are not effectively managed and/or mitigated.

In an example, a computing system comprises a Radio Access Network (RAN) Intelligent Controller (RIC) comprising: a Radio Access Network (RAN) Intelligent Controller (RIC) to manage a RAN, the RIC comprising: storage media configured to store configuration update information, the configuration update information comprising one or more configuration parameters and being indicative of a change in the one or more configuration parameters by an application of the RIC; and a conflict manager configured to: determine, based on the configuration update information, that a first parameter associated with the one or more configuration parameters has been previously updated by a non-O-RAN computing system; determine, based on the first parameter being previously updated, a conflict; apply, based on determining the conflict, a policy to determine to update the one or more configuration parameters; and update the one or more configuration parameters in accordance with the policy.

In another example, a method comprises: determining, by a Radio Access Network (RAN) Intelligent Controller (RIC), based on configuration update information, that a first parameter associated with one or more configuration parameters has been previously updated, the configuration update information comprising the one or more configuration parameters and being indicative of a change in the one or more configuration parameters by an application of the RIC; determining, by the RIC and based on the first parameter being previously updated, a conflict; applying, by the RIC and based on determining the conflict, a policy to determine to update the one or more configuration parameters; and updating, by the RIC, the one or more configuration parameters in accordance with the policy.

In another example, computer-readable media stores instructions that, when executed, cause processing circuitry to: determine, based on configuration update information, that a first parameter associated with one or more configuration parameters has been previously updated, the configuration update information comprising the one or more configuration parameters and being indicative of a change in the one or more configuration parameters by an application of a Radio Access Network (RAN) Intelligent Controller (RIC); determine, based on the first parameter being previously updated, a conflict; apply, based on determining the conflict, a policy to determine to update the one or more configuration parameters; and update the one or more configuration parameters in accordance with the policy.

The details of one or more examples are set forth in the accompanying drawings and the description below. Other features, objects, and advantages will be apparent from the description and drawings, and from the claims.

### BRIEF DESCRIPTION OF DRAWINGS

FIG. 1A is a block diagram illustrating an example network system configured to provide conflict management and mitigation among functions and/or services in a mobile network according to one or more aspects of this disclosure.
FIG. 1B is a block diagram illustrating further example details of the Non-RT RIC of the Service Management and Orchestration of FIG. 1A according to one or more aspects of this disclosure.
FIG. 2 is a block diagram illustrating an example computing system in detail according to one or more aspects of this disclosure.
FIG. 3 is a flow diagram illustrating example conflict management techniques according to one or more aspects of this disclosure.

### DETAILED DESCRIPTION

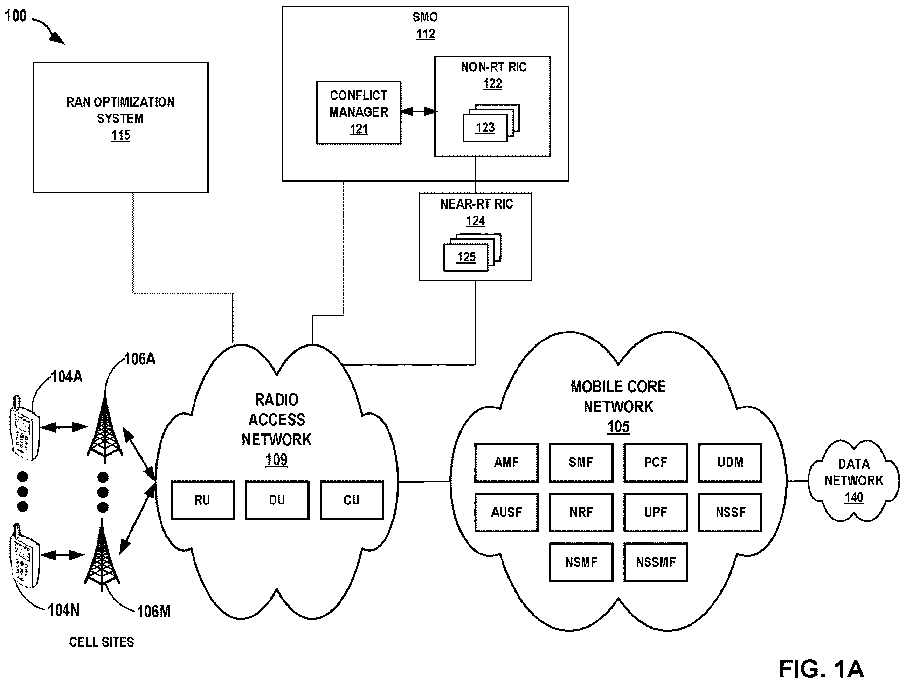

FIG. 1A is a block diagram illustrating example network system 100 configured to provide conflict management and mitigation in a mobile network according to one or more aspects of this disclosure. In the example illustrated in FIG. 1A, network system 100 includes Service and Management Orchestrator (SMO) 112, non-RT RIC 122, near-RT RIC 124, one or more radio access networks (RANs), e.g., RAN 109, and mobile core network (or simply "core") 105 that provide user equipment 104A-104N (collectively, "UEs 104") with access to one or more applications or services provided by data network 140. Network system 100 also include RAN optimization system 115. RAN optimization system 115 may be an external system and/or part of RAN 109. In the example where RAN optimization system 115 is part of RAN 109, RAN optimization system 115 may be implemented in one or more CUs and/or DUs of RAN 109. RAN optimization system 115 may include one or more C-SONs, D-SONs, or any other systems that may attempt to optimize or otherwise change configuration parameters of RAN 109 or elements thereof. In some examples, RAN optimization system 115 may include a manual system (e.g., a user interface (UI)) that allows operator personnel to manually update configuration parameters of RAN 109.

SMO 112 may provide various framework functions (e.g., logical entities or modules that provide a set of functionalities), such as a non-RT RIC 122, configured in accordance with O-RAN standards (which may be referred to as an "O-RAN architecture"), to manage and/or monitor aspects of a RAN and/or 5G core. System 100, which may include, or be an example of, an O-RAN architecture, may include non-RT RIC 122 and near-real-time RIC (near-RT RIC) 124 that each executes different functions and services for RAN functions. For example, non-RT RIC 122 includes an orchestration and automation function configured to provide radio resource management, higher layer procedure optimization, policy optimization, and provide guidance, parameters, policies and artificial intelligence (AI) and/or machine learning (ML) models to support the operation of near-RT RIC functions in the RAN. Non-RT RIC 122 may onboard one or more applications (e.g., rApps) that provide non-real time (e.g., greater than one second) control of RAN elements and their resources, and near-RT RIC 124 may onboard one or more applications (e.g., xApps) that provide near-real time control of RAN elements and their resources. System 100 includes several interfaces, such as A1, O1, and O2 interfaces, that are each used to provide the functions and services by which SMO 112 and the RICs can configure or direct other components of the RAN. For example, the functions and services of non-RT RIC 122 may include policy management services and/or enrichment information services for near-RT RIC 124 that are provided over an A1 interface (collectively referred to herein as "A1 services" because they provided over the A1 interface); Operations, Administration, and Management (OAM) services, such as performance management services and configuration management services, for O-RAN management elements that are provided over an O1 interface (referred to herein as "O1 services" because they are provided over the O1 interface); infrastructure management services and deployment management services for resources of an O-RAN cloud that are provided over an O2 interface (referred to herein as "O2 services" because they are provided over the O2 interface), and/or other services, such as service management and exposure (SME) services (e.g., registration of a service, update of a service registration), data management and exposure (DME) services, and/or AI/ML services.

UEs 104 may represent smartphones, desktop computers, laptop computers, tablets, smart watches, and/or "Internet-of-Things" (IOT) devices, such as cameras, sensors, televisions, appliances, or the like. As shown in FIG. 1A, network system 100 includes RAN 109 that provides network access, data transport, and other services to UEs 104. In some examples, RAN 109 may be an Open Radio Access Network (O-RAN), a 5G mobile network RAN, a 4G long term evolution (LTE) mobile network RAN, another type of RAN, or a combination of the above. For example, in a 5G-radio access network, RAN 109 comprises a plurality of cell sites (or simply "cells") that each include radio equipment, such as base stations 106A-106M (collectively, "base stations 106"), also known as gNodeBs for 5G mobile networks, to exchange packetized data to ultimately access one or more applications or services provided by data network 140. Each of base stations 106 is divided into three functional components: a radio unit (RU), a distributed unit (DU), and a central unit (CU), which can be deployed in various configurations. An RU manages the radio frequency layer and has antenna arrays of various sizes and shapes. A DU performs lower layer protocol processing. A CU performs the upper layer protocol processing. Depending on operator and service requirements, base stations 106 can be deployed monolithically, e.g., RU, DU, and CU reside within a cell site, or these functionalities can be distributed across cell sites while the CU resides in an edge cloud site controlling a plurality of distributed DUs. O-RAN is, for example, an approach to networking in which disaggregated functions can be used to deploy mobile fronthaul and midhaul networks. The disaggregated functions can be cloud-based functions. In some examples, RAN optimization system 115 may be implemented within RAN 109, such as in one of more DUs or CUs.

Radio access networks 109 connect to core 105 to exchange packets with data network 140. Core 105 may be a 5G core network, and data network 140 may represent, for example, one or more service provider networks and services, the Internet, third party services, one or more Internet Protocol (IP) - virtual private networks (VPNs), an IP-multimedia subsystem, a combination thereof, or other network or combination of networks. In some examples, resources associated with the service provided by a mobile network operator to the tenant may be provided by, or managed by, functions of core 105 and/or components of RAN 109. In some examples, core 105 implements various discrete control plane and user plane functions for network system 100. Examples of 5G control plane functions that may be provided by core 105 include Access Mobility Management Function (AMF) that provides access mobility management services, Session Management Function (SMF) that provides session management services, Policy Control Function (PCF) that provides policy control services, User Data Management (UDM) that provides management of network user data, Network Repository Function (NRF) that provides a repository that can be used to register and discover services in a network operator's network, Authentication Server Function (AUSF) that provides authentication services, Network Slice Selection Function (NSSF), Network Slice Management Function (NSMF) that may be used to select an instance of an available network slice for use by any of UE devices 104, and Network Slice Subnet Management Function (NSSMF) that provides coordination, management, and orchestration of network slice subnet instances (NSSI). Core 105 may also include User Plane Functions (UPF) that provides packet routing, forwarding and other network data processing functions (e.g., Quality of Service, packet inspection, traffic optimization etc.). Further details on services and functions provided by the 5G core, can be found in 3^{rd} Generation Partnership Project 2021, Technical Specification Group Services and System Aspects; System architecture for the 5G System (5GS); Stage 2 (Release 17), TS 23.501 V17.0.0 (2021-03), which is superseded by 2021, Technical Specification Group Services and System Aspects; System architecture for the 5G System (5GS); Stage 2 (Release 18), TS 23.501 V18.2.2 (2023-07), the entire contents of each of which are hereby incorporated by reference. Further details on the O-RAN architecture can be found in O-RAN Alliance, "O-RAN Architecture Description," version 7.00, October 2022, the entire contents of which is hereby incorporated by reference.

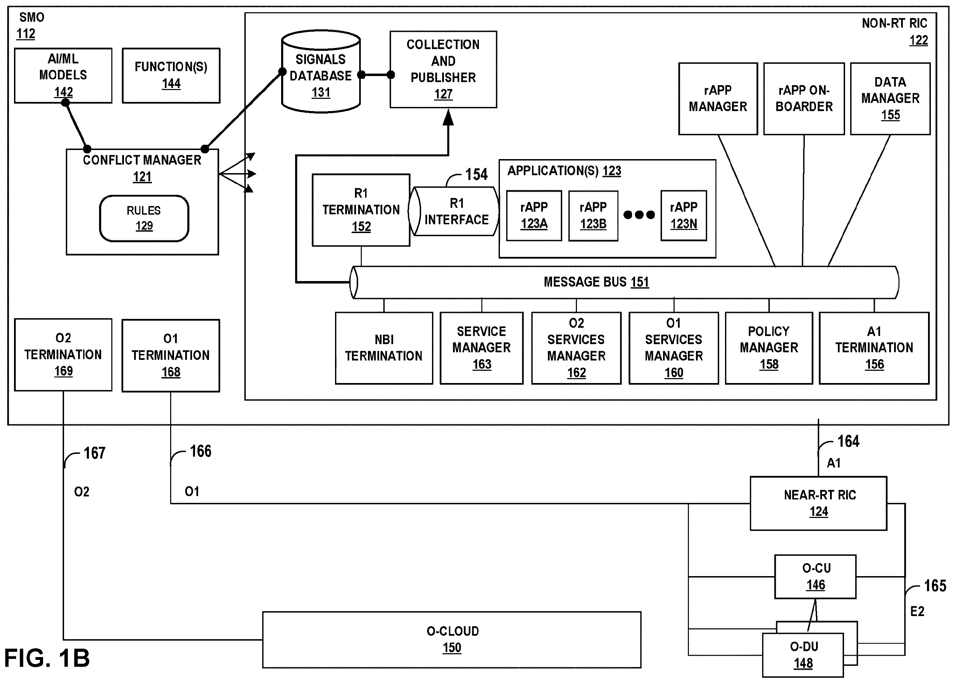

Aspects of RAN 109 and/or core 105 may be managed and/or monitored by SMO 112, non-RT RIC 122, and near-RT RIC 124. In some examples, SMO 112, non-RT RIC 122, and near-RT RIC 124 may be operated by the mobile network operator providing 5G services to a tenant. SMO 112 can orchestrate and control various management and automation aspects of RAN 109 (e.g., network slicing, management, and orchestration of Open-Cloud (O-Cloud), etc.). Further, SMO 112 may control aspects of non-RT RIC 122 and near-RT RIC 124. Non-RT RIC 122 can provide non-real-time (e.g., greater than one second) control and optimization of RAN elements and resources such as RUs, DUs, and CUs, workflow management, and policy-based control of applications and features of near-RT RIC 124. Near-RT RIC 124 can provide near-real-time (e.g., milliseconds) control and optimization of RAN elements and resources via fine-grained data collection and actions. As further described in FIG. 1B, non-RT RIC 122 and near-RT RIC 124 may deploy as a highly scalable, microservices based containerized architecture. In some examples, near-RT RIC 124 may be located within an edge or regional cloud.

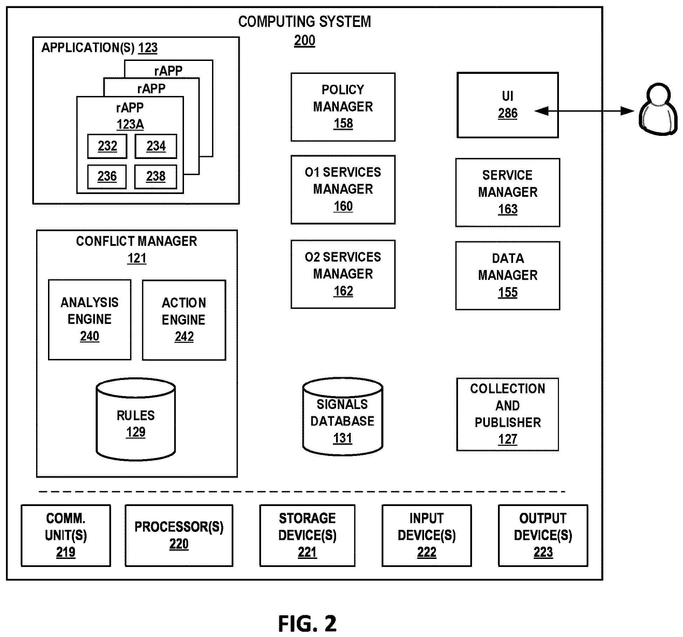

Non-RT RIC 122 may onboard one or more applications, e.g., applications 123 (e.g., rApps of FIG. 1B) that manage non-real time events within non-RT RIC 122, such as applications that do not require response times of less than one second. Applications 123 may leverage the functionality exposed via the non-RT RIC framework of non-RT RIC 122. Applications 123 may be used to control and manage RAN elements and resources, such as near-RT RIC 124, RAN nodes, and/or resources in the O-RAN cloud. Applications 123 may also utilize network data, performance metrics, and subscriber data to provide recommendations for network optimization and operational guidance (e.g., policies) to one or more applications of near-RT RIC 124. Near-RT RIC 124 may onboard one or more applications, e.g., applications 125 (e.g., xApps of FIG. 2) that manage near-real time events within near-RT RIC 124. Applications 125 may leverage the functionality exposed via the near-RT RIC framework of near-RT RIC 124. Near-RT RIC 124 may enforce policies received from applications 123 of non-RT RIC 122 and may provide policy feedback to non-RT RIC 122. Although illustrated as within non-RT RIC 122, any one or more of applications 123 may be executed by a third party, separate from non-RT RIC 122. Likewise, although illustrated as within near-RT RIC 124, any one or more of applications 125 may be executed by a third party, separate from near-RT RIC 124. Although shown as separate from non-RT RIC 122, applications 123 may in some cases include conflict manager 121 and other components that support conflict manager 121, as described elsewhere in this document. In some examples, conflict manager 121 may be an rApp, xApp, or implemented as part of non-RT RIC 122 or near-RT RIC 124.

Non-RT RIC 122 may provide services using A1, O1, and O2 interfaces. An A1 interface connects the non-RT RIC 122 and near-RT RIC 124. Non-RT RIC 122 may perform services via the A1 interface, such as policy management services (e.g., creation and update of a policy), ML model management services, and/or enrichment information services. Services performed via the A1 interface are referred to herein as "A1 services." An O1 interface may include an interface that connects SMO 112 with O-RAN managed elements, such as near-RT RIC 124 and/or RAN nodes (e.g., O-RAN centralized unit (O-CU), O-RAN distributed unit (O-DU)). Non-RT RIC 122 may perform services via the O1 interface, such as configuration management services and performance management services of O-RAN managed elements (e.g., operation and maintenance (OAM) services), fault supervision, file management, heartbeat, trace, physical network function (PNF) discovery, software management, etc.). Services performed via the O1 interface are referred to herein as "O1 services." An O2 interface may include an interface that connects SMO 112 to resources of the O-RAN O-Cloud. The O-Cloud may comprise of one or more physical infrastructure nodes that host O-RAN functions (e.g., virtual network functions), the supporting software components, and the appropriate management and orchestration functions. Non-RT RIC 122 may perform services via the O2 interface, such as services that provide infrastructure management and/or network function deployment of the resources in the O-Cloud (e.g., discovery and administration of O-Cloud resources; Scale-In, Scale-Out of cloud/deployments; Fault, Configuration, Accounting, Performance, and Security (FCAPS) of cloud/deployments, software management of cloud platform/deployments; create/delete deployment and associated allocated O-Cloud resources). Services performed via the O2 interface are referred to herein as "O2 services." Non-RT RIC 122 may also perform other functions and services, such as service management and exposure (SME) services (e.g., registration of a service, update of a service registration), data management and exposure (DME) services, AI/ML services, or the like.

In some instances, functions and/or services (e.g., A1 services, O1 services, O2 services, etc.) provided by non-RT RIC 122 and services provided by RAN optimization system 115 may be in conflict. Besides services associated with different interfaces and functions associated with core network functions or RAN functions, "services" as referred to herein may also include higher order use cases or goals, such as Energy Savings mode or Slice Service Level Agreement (SLA) assurance.

Some conflicts may be observed directly by the framework functions, such as non-RT RIC 122. Such conflicts may be referred to herein as "direct conflicts". For example, an application of applications 123 may request a particular setting for a parameter of a target while RAN optimization system 115 may request a different setting for the same parameter of the target (e.g., an application of applications 123 requests for particular tilt of an antenna, whereas RAN optimization system 115 requests a different tilt of the same antenna). A target may be a configurable parameter, setting, object, or resource of the RAN, such as a priority, a policy, a network slice or network slice parameter, etc. As another example, an application of applications 123 may perform a change that conflicts with a running configuration from a previous request of RAN optimization system 115 (or vice versa). Direct conflicts include a conflict involving a same parameter of a device or system. According to the techniques of this disclosure, by subscribing to configuration updates, direct conflicts can be observed directly by network system 100 control plane components.

In some examples, some conflicts may not be observed directly, but dependence among the parameters and resources that the applications are targeting can be observed (referred to herein as an "indirect conflict"). For example, an application may perform a change that creates a system impact which is equivalent to a change performed by RAN optimization system, or vice versa (e.g., applications performing different actions, but impacts to the system are equivalent). Indirect conflicts cannot be observed directly, nevertheless, some dependence among the parameters and resources can be observed.

The above are example types of conflicts and are merely some examples of the types of conflicts. Other conflicts may be observable by network system 100 control plane components, such as conflicts that are not observed directly or where the dependency between applications is not obvious (referred to as an "implicit conflict"). Implicit conflicts cannot be observed directly. Different use cases may optimize different functions/different parameters and may have implicit, unwanted, and/or adverse side effects to other use cases.

There are different possible approaches for conflict mitigation. In some examples, direct conflicts typically can be mitigated by pre-action coordination. Indirect conflicts may be resolved by post-action verification. Based on observations of the network state, which may include network resource model parameters, a system may decide on potential corrections, e.g., rolling back one of the xApp or rApp actions. Implicit conflicts are the most difficult to mitigate because these dependencies are difficult or impossible to observe and therefore hard to model in any mitigation scheme. In some cases, it may be possible to design around such conflicts by ensuring that use cases (implemented or supported by, e.g., xApps or rApps) target different parameters, thus falling back to post-action verification. In some examples, network system 100 may implement one or more AI and/or ML models that may be trained on network data such that the AI and/or ML models may predict a conflict (including a direct, indirect, and/or implicit conflict) and conflict manager 121 may use the predicted conflict to mitigate a conflict by pre-action coordination.

In accordance with the techniques described in this disclosure, network system 100 provides a conflict management and mitigation framework for non-RT RIC 122 that manages RAN 109. In this example, SMO 112 includes a conflict manager 121 configured to provide conflict management for one or more non-RT RIC 122 functions or services. As illustrated in FIG. 1A, conflict manager 121 may be a component of SMO 112 for an associated enterprise, mobile network operator, and/or provider associated with RAN 109. Conflict manager 121 may also be, or alternatively be, a separate systems associated with a third party, which may also be an enterprise, mobile network operator, and/or provider. Conflict manager 121 may also be, or alternatively be, a component of non-RT RIC 122 or near-RT RIC 124. Conflict manager 121 may be pluggable within an extensible platform, such as non-RT RIC 122 and/or SMO 112. Conflict manager 121 may include one or more AI and/or ML models. Conflict manager 121 may be implemented, for example, by one or more microservices. In some examples, conflict manager 121 may be implemented in one or more of applications 123.

Non-RT RIC 122 stores signals, which can include messages communicated via interfaces; events reported via interfaces; and/or actions directed and optionally reported via the interfaces, where the interfaces may include, for examples, the O1, A1, O2, and E2 interfaces as defined by 3GPP and O-RAN standards. Non-RT RIC 122 may store such signals in association with network state information representative of the state of the mobile network at the time of a signal. Network state information can include telemetry information, network resource model data, or other data indicative of network configuration state, operational state, and/or network performance. In this way, non-RT RIC 122 captures events, messages, and/or actions of applications 123 and/or 125 (e.g., rApps and/or xApps) over the O1, A1, O2 and E2 interfaces. Conflict manager 121 obtains signals (and optionally associated network state information) stored by non-RT RIC 122 determined as useful for conflict management and mitigation.

Based on the obtained data, conflict manager 121 may identify conflicts. Conflict manager 121 may then provide feedback and direct or otherwise communicate with non-RT RIC 122 to mitigate and/or manage the identified conflicts.

While there are solutions being developed for conflict management within O-RAN RICs and O-RAN applications, there are no known solutions to handle potential conflicts between an O-RAN RIC and non-O-RAN RIC systems (such as C-SON, D-SON, operator manually triggered optimizations, other external optimization systems, etc.). RAN optimization systems, such as RAN optimization system 115 are likely to be slowly retired and not replaced all at once with non-RT RICs and rApps. There will likely be a lengthy period of transition and in some cases, there may be co-existence for a very long period of time. As such, conflicts that may arise between these two optimization systems (non-RT RIC 122/rApps 123 and RAN optimization system 115, (e.g., traditional C-SON, D-SON, etc.).

For example, non-RT RIC 122 may be configured to gather information about optimization actions (e.g., configuration changes) made by RAN optimization system 115 so non-RT RIC 122 may detect and mitigate conflicts. In some examples, non-RT RIC 122 may be configured to expose a new service so external entities, such as RAN optimization system 115 can check for potential conflicts with non-RT RIC122 and/or rApps 123 through an SME interface.

Non-RT RIC 122 may use 3GPP (TS 28.532) or O-RAN defined techniques to subscribe for configuration update notifications. In this manner, non-RT RIC 122 may learn or be informed of configuration parameters of RAN 109 that RAN optimization system 115 may change or optimize. If, for example, RAN-based nodes, such as based stations, CUs, DUs, etc., do not support 3GPP or O-RAN configuration update features, non-RT RIC 122 may be configured to use vendor specific configuration update notification APIs to learn or be informed of configuration parameters of RAN 109 that RAN optimization system 115 may change or optimize. In some examples, operator personnel may manually enter configuration update notification information via a RIC UI (not shown in FIG. 1A). In this case, non-RT RIC 122 may not only learn of standards-based and/or vendor specific configuration updates, but also an operator's manual configuration updates.

Conflict manager 121 may process the configuration update notification information (e.g., via the standards-based, vendor specific, and/or manually entered techniques) from RAN optimization system 115 for conflict detection purposes. Conflict manager may store, e.g., in a table, database, etc., the configuration update requests (e.g., target node/cell id, target configuration object, target attribute within config object, etc.) or information therefrom, to be able to detect conflicts across rApps 123.

By capturing configuration changes made by RAN optimization system 115, non-RT RIC 122 may be used to detect potential conflicts between legacy systems, such as RAN optimization system 115 and rApps 123.

Non-RT RIC 122 may also monitor rApps 123 for any configuration updates rApps 123 may make or attempt to make in RAN 109. Non-RT RIC 122 may store rApp configuration update requests or information therefrom, for example, in a table, database, etc. Additionally, or alternatively, non-RT RIC 122 may subscribe to configuration updates from rApps 123 similarly to subscribing to configuration updates from RAN optimization system 115. As such, conflict manager 121 of non-RT RIC 122 may obtain information indicative of which configuration parameters RAN optimization system 115 and rApps 123 are updating.

For example, when RAN optimization system 115 makes a configuration update to RAN 109, non-RT RIC detects the configuration update and may determine that the configuration update is a conflict based on stored information in the table or database that indicates that another entity, such as a particular rApp, may have previously updated that particular parameter. Similarly, when a particular rApp makes a configuration update to RAN 109, non-RT RIC 122 detects the configuration update and may determine that the configuration update is a conflict based on stored information in the table or database that indicates that RAN optimization system 115 may have previously updated that particular parameter. In some examples, such a previous update includes a previous update to a same cell or base station as the configuration update.

While this example is described with respect to a direct conflict, it should be understood that the techniques of this disclosure may also be used to manage and/or mitigate indirect conflicts and/or implicit conflicts. In some examples, non-RT RIC 122 may execute one or more artificial intelligence (AI) and/or machine learning (ML) models to determine indirect and/or implicit conflicts, and may store a correspondence of parameters which may be implicated in any indirect and/or implicit conflicts such that conflict manager 121 may manage and/or mitigate indirect and/or implicit conflicts.

In the example where a parameter update is made or is sought to be made by an rApp, after non-RT RIC 122 detects the conflict, non-RT TIC 122 may mitigate this conflict because non-RT RIC 122 has control over the actions of rApps 123. For example, non-RT RIC 122 may employ an operator policy (e.g., an operator conflict management policy), a deterministic algorithm, an AI and/or ML model, or the like, to take some action regarding the change the rApp is attempting to make. Example operator policies may include "allow rApp to overwrite external system," "do not allow rApp to overwrite external system," "time of day based allow/do not allow," etc. For example, an "allow rApp to overwrite external system" policy would permit the rApp to overwrite a change previously implemented by RAN optimization system 115. A "do not allow rApp to overwrite external system" policy would not permit the rApp to overwrite a change previously implemented by RAN optimization system 115. A "time of day based allow/do not allow" policy would permit the rApp to overwrite a change previously implemented by RAN optimization system 115 only during specific times of the day. It should be understood that many other types of policies may be implemented.

In the example where a parameter update is made or is sought to be made by RAN optimization system 115, non-RT RIC 122 likely has very limited or non-existent control over RAN optimization system 115. As such, after non-RT RIC 122 detects the conflict, non-RT RIC 122 may offer a conflict guidance service to RAN optimization system 115 or to an operator UI, so RAN optimization system 115 and/or an operator may check for conflicts with non-RT RIC 122/rApps 123 prior to taking action in implementing the parameter update, if desired. In some examples, the conflict guidance may provide possible actions that may be taken to avoid the conflict. In the case where conflict guidance is not desired prior to implementing the parameter update, non-RT RIC 122 may provide a notification of the conflict to RAN optimization system 115 or to an operator UI after the parameter has been updated.

In some examples, these techniques may be used for any SMO 112 interactions with operations support systems (OSS) / business support systems (BSS) where any configuration update made on either SMO or the OSS/BSS system can be tracked and conflicts can be detected and potentially mitigated.

For example, RAN optimization system 115 may issue a command to change a configuration parameter for an antenna tilt to affect geographic coverage and/or interference. Such a change may negatively affect a change made by an rApp of applications 123 for other reasons. This may be a conflict and may cause an ongoing battle of configuration changes by RAN optimization system 115 and the rApp to control the antenna tilt. Other changeable parameters may include a cell identifier that identifies a given cell from among other cells within a mobile network, a tracking area code, a carrier frequency, other antenna configuration parameters, cell reselection parameters, handover parameters, initial connection parameters for UEs, and system information block (SIB) parameters, among others.

In some examples, conflict manager 121, upon receiving a notification of a change to a configuration parameter via the configuration update subscription, conflict manager 121 may determine whether any rApps have previously changed the same parameter (which may be indicative of a direct conflict) or an associated parameter that may cause an indirect conflict or implicit conflict. If one of the rApps has previously changed the same or an associated parameter, conflict manager 121 may determine a conflict.

In some examples, a base station may generate the notification of configuration changes. In some examples, an element management system may generate the notification of configuration changes.

In the event an rApp is attempting to change a configuration parameter, conflict manager 121 may perform a lookup in the table or database to see if another entity (e.g., RAN optimization system 115, another rApp, or the like) has previously updated the same parameter or an associated parameter. If another entity has previously updated the same parameter or an associated parameter, conflict manager 121 may allow or disallow the change, for example, based on some operator defined policy. For example, the operator defined policy may assign a priority to different devices or systems attempting to change parameters and may permit the change if the priority of the rApp is higher than the priority of the device or system making the previous change. For example, an "allow rApp to overwrite external system" and a "do not allow rApp to overwrite external system" may be viewed as priority-based policies. In another example, the operator defined policy may be a first come, first served policy, which may prevent the change from occurring because the other entity initiated a change to the parameter earlier in time.

Because non-RT RIC 122 may subscribe to configuration updates, in the event that a conflict exists between a change attempting to be made by an rApp and a previous change, and conflict manager 121 permits the change to be made, non-RT RIC 122 may receive an acknowledgement through the configuration update subscription that the change to the parameter has been made.

In some examples, conflict manager 121 may utilize a time limitation or parameter when determining whether there is a conflict. For example, if a change to a parameter was made at least or more than a time period ago, then such a change may not be considered as raising a conflict. This time limitation may be an operator configurable parameter or may be determined by one or more AI and/or ML models based on network data, such as previous changes, network key performance indicators (KPIs), etc. For example, if network availability is always at 99% availability, even when a change to a given configuration parameter is changed, the one or more AI and/or ML models may determine that there is not a conflict there and the time limitation may be quite small. However, if such a change were to negatively impact the network availability, the one or more AI and/or MI models may determine that the time limitation should be larger, thereby identifying even less frequent changes to the configuration parameter as conflicts.

Additional details for handling conflicts are found in U.S. Patent Publication 2024/0163649, published May 16, 2024, entitled "Conflict Management of Functions and Services," and Greek Patent Application No. 20240100589 filed August 22, 2024, entitled "RAN Intelligent Controller (RIC) Conflict Management and Mitigation Framework," the entire content of both of which is incorporated by reference herein in their entirety.

FIG. 1B is a block diagram illustrating example details of the non-RT RIC 122 of FIG. 1A according to one or more aspects of this disclosure. In the example illustrated in FIG. 1B, SMO 112 may include non-RT RIC 122, one or more AI/ML models 142, one or more functions 144 (e.g., NSSMF, Network Function Management Function (NFMF), and other functions), and open interfaces, such as O1 termination interface 168 and O2 termination interface 169. SMO 112 may manage non-RT RIC 122, near-RT RIC 124, O-RAN managed elements (e.g., centralized unit (O-CU) 146, O-RAN decentralized unit (O-DU) 148 of one or more base stations), and resources in O-RAN cloud 150.

Near-RT RIC 124 can provide near-real-time (e.g., milliseconds) control and optimization of RAN elements and resources, such as O-CU 146 and/or O-DU 148, via fine-grained data collection and actions performed via E2 interface 165. For example, near-RT RIC 124 may onboard one or more applications (e.g., xApps) that provide near-real time control of RAN elements and their resources.

Non-RT RIC 122 may provide non-real-time (e.g., greater than one second) control and optimization of RAN elements and resources such as RUs, DUs, and CUs, workflow management, and policy-based control of applications and features of near-RT RIC 124.

Non-RT RIC 122 may be deployed as a highly scalable, microservices based containerized architecture. In this example, non-RT RIC 122 may onboard, deploy, and/or terminate one or more applications, e.g., rApp 123A through rApp 123N (collectively "applications 123"). Applications 123 may represent applications that leverage the functionality exposed via the framework of non-RT RIC 122. Applications 123 may provide non-RT RIC 122 with non-real time (e.g., greater than one second) control of RAN elements and their resources. Applications 123 may provide services for radio resource management, higher layer procedure optimization, policy optimization, and providing guidance, parameters, policies, and AI and/or ML models to support the operation of RAN functions.

For example, applications 123 may provide A1 services that provide and facilitate RAN operations and optimization of near-RT RIC 124, such as providing operational guidance (e.g., policies), enrichment information (e.g., forecasts), and AI/ML services. A1 services may include policy management services such as creating, updating, and/or deleting of A1 policies; receiving policy feedback; querying policy types, identifiers, and status; defining which policy types are supported by near-RT RIC 124; and registering applications (xApps) of near-RT RIC 124 to specific policy types. A1 services may include enrichment information services, such as providing data for model training of AI and/or ML models, such as forecasts and/or data analytics.

Applications 123 may provide O1 services that provide configuration management or performance management of O-RAN managed entities, such as near-RT RIC 124 and/or RAN nodes, e.g., O-CU 146, O-DU 148 (also referred to herein as "E2 nodes"). O1 services may provide configuration management services to create, update, and/or delete configurations to O-RAN managed entities. For example, configuration management services may include provisioning operations (e.g., for Network Switching Subsystem (NSS) and network function (NF) provisioning) to create a managed object instance (MOI), obtain MOI attributes, modify MOI attributes, and/or delete the MOI. O1 services may also provide performance management services that monitor the status of elements or components in the O-RAN managed entities. For example, non-RT RIC 122 may create, modify, or delete performance management jobs to receive performance metrics, or send heartbeat messages to monitor the status and/or availability of services of RAN nodes or to send trace messages to monitor link failures. O1 services may also provide file management, such as to push files to the RAN nodes (e.g., software updates, beamforming configuration files, ML models, security certificates, etc.). As another example, O1 services via O1 interface 166 may be used to configure network elements, including those modeled according to information models defined in for New Radio Network Resource Model (NR NRM), as described in 3GPP TS 28.541, V18.8.0, June, 2024, "3rd Generation Partnership Project; Technical Specification Group Services and System Aspects; Management and orchestration; 5G Network Resource Model (NRM); Stage 2 and stage 3 (Release 18)," which is incorporated herein by reference in its entirety.

Applications 123 may provide O2 services that provide infrastructure management and/or network function deployment of resources in O-RAN cloud 150 (also referred to herein as "O-Cloud 150"). O2 services may provide discovery and administration of O-Cloud resources; Scale-In, Scale-Out of cloud/deployments (e.g., deploying resources with more or less processors); FCAPS of cloud/deployments, software management of cloud platform/deployments; create/delete deployment and associated allocated O-Cloud resources.

Applications 123 may provide service management and exposure (SME) services, data management and exposure (DME) services, and/or other services. SME services may provide services that enable services provided over an internal interface (R1 interface 154) of non-RT RIC 122 and their exposure and extensibility through services including bootstrap, service registration/deregistration or updates to service registration, service discovery or notification, heartbeat, authentication, authorization, etc. DME services may include services that manage data and their exposure between applications 123. For example, applications 123 may have different functions, such as application 123A configured to collect and analyze data, application 123B configured to generate an ML model based on the results of the analysis, and application 123N configured to make a prediction or inference using the ML model and/or to generate controls for RAN nodes based on the prediction or inference. DME services may manage the data shared between applications 123, such as the collection of data, the processing of the data, and/or the advertisement of the data.

As already noted, applications 123 may include conflict manager 121, as well as collection and publisher service 127.

Non-RT RIC 122 may include one or more managers to process the A1, O1, O2, SME, DME services, and other services. For example, non-RT RIC 122 may include a policy manager 158, O1 services manager 160, O2 services manager 162, service manager 163, data manager 155, and conflict manager 121. Non-RT RIC 122 may include other managers, such as an application manager and an application on-boarder, that are configured to manage the installation and deployment of applications 123.

Policy manager 158 is configured to control the deployment of policies (e.g., A1 services). For example, in response to receiving requests for A1 services from applications 123 via R1 interface 154, R1 interface 154 sends the requests to policy manager 158 via message bus 151. Policy manager 158 may process the A1 services and may send the A1 services to A1 termination 156 via message bus 151, which provides the A1 services to near-RT RIC 124 via A1 interface 164. In some examples, the A1 interface may implement an A1 application protocol (A1AP) based on the O-RAN specifications.

O1 services manager 160 is configured to control the deployment of O1 services for monitoring the performance of near-RT RIC 124 and/or RAN nodes (e.g., O-CU 146, O-DU 148). For example, in response to receiving requests for O1 services for monitoring the performance of near-RT RIC 124 from applications 123 via R1 interface 154, R1 interface 154 sends the requests to O1 services manager 160 via message bus 151. O1 services manager 160 may process the O1 services and may send the O1 services to O1 termination 168, which provides the O1 services to near-RT RIC 124 via O1 interface 166. In some examples, the O1 interface may implement REST/ Hypertext Transfer Protocol Secure (HTTPS) APIs and/or Network Configuration Protocol (NETCONF).

O1 services manager 160 is additionally, or alternatively, configured to control the deployment of O1 services for the configuration of near-RT RIC 124 and/or RAN nodes. For example, in response to receiving requests for O1 services for the configuration of near-RT RIC 124 from applications 123 via R1 interface 154, R1 interface 154 sends the requests to O1 services manager 160. O1 services manager 160 may process the O1 services and may send the O1 services to O1 termination 168, which provides the O1 services to near-RT RIC 124 via O1 interface 166.

O2 services manager 162 may be configured to control the deployment of O2 services for monitoring the performance of resources of O-Cloud 150. For example, in response to receiving requests for O2 services for monitoring the performance of resources within O-Cloud 150 via R1 interface 154, R1 interface 154 sends the request to O2 services manager 162. O2 services manager 162 may process the O2 services and may send the O2 services to O2 termination 169, which provides the O2 services to resources of O-Cloud 150 via O2 interface 167.

O2 services manager 162 may additionally, or alternatively, be configured to control the deployment of O2 services for the configuration of resources of O-Cloud 150. For example, in response to receiving requests for O2 services for configuring resources within O-Cloud 150 from applications 123 via R1 interface 154, R1 interface 154 sends the requests to O2 services manager 162. O2 services manager 162 may process the O2 services and may send the O2 services to O2 termination 169, which provides the O2 services to resources of O-Cloud 150 via O2 interface 167.

In some examples, R1 interface 154 also exposes applications 123 to SME services, DME services, and/or other services. For example, in response to receiving requests for SME services from applications 123 via R1 interface 154, R1 interface 154 sends the requests to service manager 163. Service manager 163 may process the SME services (e.g., register/update a service) and may send the SME services to R1 termination 152, which provides the SME services to applications 123 via R1 interface 154 (e.g., sending response to application regarding service registration, update, or discovery). Similarly, in response to receiving requests for DME services from applications 123 via R1 interface 154, R1 interface 154 sends the requests to data manager 155. Data manager 155 may process the DME services and may send the DME services to R1 termination 152, which provides the DME services to applications 123 via R1 interface 154 (e.g., sending data from application configured as a data producer to application configured as a data consumer).

R1 interface 154 may also expose applications 123 to slice subnet management services, such as RAN NSSMF interfaces to retrieve slice service level agreements (SLAs) and slice topologies, and/or slice management, SLA, and slice performance management notifications to applications 123.

In accordance with the techniques described in this disclosure, conflict manager 121 and collection and publisher 127 are services for facilitating conflict management as discussed herein. Signals database 131 may include storage media and may store signals data relating to signals, optionally in association with network state information representative of the state of the mobile network at the time of a signal. Signals database 126 may represent a redis database, a Structured Query Language (SQL) database, another database, a file, a table, a log, or other data structure stored to a storage medium. Conflict manager 121 and collection and publisher service 127 may be microservices or other containerized applications, virtual machines, processes, and/or other type of deployable software.

In the illustrated example, non-RT RIC 122 may monitor signals exchanged among managers/services and applications 123 via message bus 151 and additionally sends the signals to collection and publisher service 127. Collection and publisher service 127 collects these O1, A1, O2 and E2 interface signals from the RIC, combining them and storing these signals, along with other applicable state information about the network, to signals database 131.

Collection and publisher service 127 provide these signals using (optionally open) interfaces to authorized conflict manager 121 or other applications that may be part of the non-RT RIC 122, or to plugins for third-party applications. The open interface may enable future replacements and/or upgrades of conflict manager 121 to facilitate ongoing improvements, including AI and/or ML-based conflict management and mitigation, and a dynamic and extensible approach to conflict management and mitigation. Although only one conflict manager 121 is shown, additional conflict managers, e.g., associated with other operators or users, may be authorized to receive the signals for analysis and/or conflict mitigation and managements. Conflict manager 121 may subscribe to collection and publisher service 127 to receive signals. The subscription framework may be, e.g., a pub/sub framework whereby collection and publisher service 127 publishes selected signals and associated network state information to topics that can be subscribed to by conflict manager 121, a message bus, or other framework. Conflict manager 121 may subscribe to specified subsets of the signals, such as signals relating to a particular O1, A1, O2, or E2 interface, or to signals relating to particular network elements or information models.

Conflict manager 121 processes signals obtained from signals database 131 and, upon detecting a conflict, conflict manager interacts with non-RT RIC 122 regarding possible conflict avoidance and mitigation strategies. For non-RT RIC 122, collection and publisher service 127 and conflict manager 121 may interact via (optionally open) interfaces to enable future replacements of these services and/or applications. An open interface may be one implemented according to an open standard, or a non-proprietary interface. Conflict manager 121 may implement AI and/or ML-based conflict management and mitigation strategies.

For example, conflict manager 121 is configured to provide conflict management for services of the corresponding interface(s) of non-RT RIC 122. While conflict manager 121 is illustrated as a separate microservice of non-RT RIC 122, in some examples, the techniques described herein may be performed by one or more other microservices, such as policy manager 158, O1 services manager 160, O2 services manager 162, service manager 163, and/or data manager 155. In this example, in response to receiving a request of an A1 service, O1 service, O2 service, or other services (e.g., SME, DME), R1 termination 152 may send a message via message bus 151 to conflict manager 121 to perform conflict management of the A1 service, O1 service, O2 service, or other services.

FIG. 2 is a diagram illustrating an example computing system in detail according to one or more aspects of this disclosure. In this example of FIG. 2, computing system 200 may implement, for example, a non-real time RIC, such as non-RT RIC 122 of FIGS. 1A-1B. Conflict manager 121, signals database 131, and collection and publisher service 127 may be part of the RIC platform or deployed to a separate computing system and communicating via the RIC platform via a network.

Computing system 200 includes one or more processors 220, one or more input devices 222, one or more output devices 223, one or more communication units 219, and one or more storage devices 221. In some examples, computing system 200 is a cloud computing system, server farm, and/or server cluster (or portion thereof) that provides services to client devices and other devices or systems. In other examples, computing system 200 may be implemented through one or more virtualized compute instances (e.g., virtual machines, containers) of a data center, cloud computing system, server farm, and/or server cluster.

One or more of the devices, modules, storage areas, or other components of computing system 200 may be interconnected to enable inter-component communications (physically, communicatively, and/or operatively). In some examples, such connectivity may be provided by communication channels, a system bus (e.g., message bus 151 of FIG. 1B), a network connection, an inter-process communication data structure, or any other method for communicating data.

One or more processors 220 of computing system 200 may implement functionality and/or execute instructions associated with conflict management of a non-RT RIC or associated with one or more modules illustrated herein and/or described herein, including applications 123, policy manager 158, O1 services manager 160, O2 services manager 162, service manager 163, data manager 155, and conflict manager 121. One or more processors 220 may be, may be part of, and/or may include processing circuitry that performs operations in accordance with one or more aspects of the present disclosure. Examples of processors 220 include microprocessors, application processors, display controllers, auxiliary processors, one or more sensor hubs, and any other hardware configured to function as a processor, a processing unit, or a processing device. Computing system 200 may use one or more processors 220 to perform operations in accordance with one or more aspects of the present disclosure using software, hardware, firmware, or a mixture of hardware, software, and firmware residing in and/or executing at computing system 200. Any one or more of applications 123, policy manager 158, O1 services manager 160, O2 services manager 162, service manager 163, data manager 155, conflict manager 121, signals database 131, or collection and publisher service 127 may be hosted by a cloud provider or other third-party.

One or more communication units 219 of computing system 200 may communicate with devices external to computing system 200 by transmitting and/or receiving data, and may operate, in some respects, as both an input device and an output device. In some examples, communication units 219 may communicate with other devices over a network. In other examples, communication units 219 may send and/or receive radio signals on a radio network, such as a cellular radio network. In other examples, communication units 219 of computing system 200 may transmit and/or receive satellite signals on a satellite network, such as a Global Positioning System (GPS) network. Examples of communication units 219 include a network interface card (e.g., an Ethernet card), an optical transceiver, a radio frequency transceiver, a GPS receiver, or any other type of device that can send and/or receive information. Other examples of communication units 219 may include devices capable of communicating over Bluetooth^{®}, GPS, NFC, ZigBee, and cellular networks (e.g., 3G, 4G, 5G), and Wi-Fi^{®} radios found in mobile devices, as well as Universal Serial Bus (USB) controllers and the like. Such communications may adhere to, implement, or abide by appropriate protocols, including Transmission Control Protocol/Internet Protocol (TCP/IP), Ethernet, Bluetooth, Near-Field Communication (NFC), or other technologies or protocols.

One or more input devices 222 may represent any input devices of computing system 200 not otherwise separately described herein. One or more input devices 222 may generate, receive, and/or process input from any type of device capable of detecting input from a human or machine. For example, one or more input devices 222 may generate, receive, and/or process input in the form of electrical, physical, audio, image, and/or visual input (e.g., peripheral device, keyboard, microphone, camera).

One or more output devices 223 may represent any output devices of computing system 200 not otherwise separately described herein. One or more output devices 223 may generate, transmit, and/or process output for any type of device capable of detecting output from a human or machine. For example, one or more output devices 223 may generate, transmit, and/or process output in the form of electrical and/or physical output (e.g., peripheral device, actuator).

One or more storage devices 221 within computing system 200 may store information for processing during operation of computing system 200. Storage devices 221 may store program instructions and/or data associated with one or more of the modules described in accordance with one or more aspects of this disclosure. One or more processors 220 and one or more storage devices 221 may provide an operating environment or platform for such modules, which may be implemented as software, but may in some examples include any combination of hardware, firmware, and software. One or more processors 220 may execute instructions and one or more storage devices 221 may store instructions and/or data of one or more modules. The combination of processors 220 and storage devices 221 may retrieve, store, and/or execute the instructions and/or data of one or more applications, modules, or software. Processors 220 and/or storage devices 221 may also be operably coupled to one or more other software and/or hardware components, including, but not limited to, one or more of the components of computing system 200 and/or one or more devices or systems illustrated as being connected to computing system 200.

In some examples, one or more storage devices 221 are temporary memories, meaning that a primary purpose of the one or more storage devices is not long-term storage. Storage devices 221 of computing system 200 may be configured for short-term storage of information as volatile memory and therefore not retain stored contents if deactivated. Examples of volatile memories include random access memories (RAM), dynamic random-access memories (DRAM), static random-access memories (SRAM), and other forms of volatile memories known in the art. Storage devices 221, in some examples, also include one or more computer-readable storage media. Storage devices 221 may be configured to store larger amounts of information than volatile memory. Storage devices 221 may further be configured for long-term storage of information as non-volatile memory space and retain information after activate/off cycles. Examples of non-volatile memories include magnetic hard disks, optical discs, Flash memories, or forms of electrically programmable memories (EPROM) or electrically erasable and programmable (EEPROM) memories.

Computing system 200 may provide conflict management for applications 123. As described above, applications 123 may manage non-real time events within non-RT RIC 122, such as applications that do not require response times of less than one second. Applications 123 may leverage the functionality exposed via a non-RT RIC framework of computing device 200. Applications 123 may be used to control and manage RAN elements and resources, such as a near-RT RIC, RAN nodes, and/or resources in the O-RAN cloud. Applications 123 may provide one or more services that are performed using interfaces of computing system 200 (e.g., A1 interface, O1 interface, O2 interface, etc.). For example, applications 123 may include services such as policies 232 for a near-RT RIC, configuration instructions 234 for O-RAN managed elements, performance jobs 236 for O-RAN managed elements, services for managing the services and/or data 238, etc.

Computing system 200 may include one or more modules or units configured to perform one or more services or functions of applications 123, such as policy manager 158, O1 services manager 160, O2 services manager 162, service manager 163, data manager 155, and conflict manager 121, as described above.

For example, policy manager 158 is configured to control the deployment of policies (e.g., A1 services). For example, policy manager 158 may receive requests for A1 services from applications 123 (e.g., via R1 interface 154 of FIG. 1B), process the A1 services from applications 123, and perform the A1 services for a near-RT RIC using an A1 interface (e.g., A1 interface 164 of FIG. 1B). In some examples, the A1 interface may implement an A1AP application protocol based on the 3GPP framework.

O1 services manager 160 is configured to control the deployment of O1 services for monitoring the performance of O-RAN managed elements (e.g., near-RT RIC 124, O-CU 146, O-DU 148 of FIG. 1B). For example, O1 services manager 160 may receive requests for O1 services for monitoring the performance of the near-RT RIC from applications 123 (e.g., via R1 interface 154 of FIG. 1B), process the O1 services, and perform the O1 services for the O-RAN managed elements using an O1 interface (e.g., O1 interface 166 of FIG. 1B). In some examples, the O1 interface may implement REST/HTTPS APIs and/or NETCONF.

O1 services manager 160 is additionally, or alternatively, configured to control the deployment of O1 services for the configuration of near-RT RIC 124 and/or RAN nodes. For example, O1 services manager 160 may receive requests for O1 services for the configuration of O-RAN managed elements from applications 123 (e.g., via R1 interface 154 of FIG. 1B), process the O1 services, and may perform the O1 services for the O-RAN managed elements using an O1 interface (e.g., O1 interface 166 of FIG. 1B).

O2 services manager 162 may be configured to control the deployment of O2 services for monitoring the performance of resources of the O-RAN cloud. For example, O2 services manager 162 may receive requests for O2 services for monitoring the performance of resources within the O-RAN cloud (e.g., via R1 interface 154 of FIG. 1B), process the O2 services, and may perform the O2 services for the resources of the O-RAN cloud using an O2 interface (e.g., O2 interface 167 of FIG. 1B).

O2 services manager 162 may additionally, or alternatively, be configured to control the deployment of O2 services for the configuration of resources of the O-RAN cloud. For example, O2 services manager 162 may receive requests for O2 services for configuring resources within the O-RAN cloud from applications 123 (e.g., via R1 interface 154 of FIG. 1B), process the O2 services, and may perform the O2 services for the resources of the O-RAN cloud using an O2 interface (e.g., O2 interface 167 of FIG. 1B).

Service manager 163 is configured to manage services, such as registration of a service, update of a service registration, service discovery, etc. For example, service manager 163 may receive requests for SME services from applications 123 (e.g., via R1 interface 154 of FIG. 1B), perform the SME service (e.g., register/update a service) for one or more applications 123, and send a response to the one or more applications 123 using an R1 interface (e.g., R1 interface 154 of FIG. 1B).

Data manager 155 is configured to manage the data of applications 123. For example, data manager 155 may receive requests for DME services from applications 123 (e.g., via R1 interface 154 of FIG. 1B), perform the DME services (e.g., sending data from application configured as a data producer to application configured as a data consumer) for one or more applications 123, and send a response to the one or more applications 123 using an R1 interface (e.g., R1 interface 154 of FIG. 1B).

Computing system 200 includes conflict manager 121 configured to provide conflict management of services performed using interfaces of the non-RT RIC. In this example, conflict manager 121 includes an analysis engine 240, and action engine 242, and one or more conflict management rules 244.

In some examples, analysis engine 240 is configured to determine that a service may have a conflict. For example, analysis engine 240 may be configured to determine whether overlapping policies (e.g., where at least a portion of the scope of the policies overlap) include contradicting statements (e.g., objective/resource statements) of A1 services performed using the A1 interface. In some examples, analysis engine 240 is configured to determine whether requests to configure one or more O-RAN managed elements performed using the O1 interface or one or more resources of the O-RAN cloud performed using the O2 interface would cause a conflict (e.g., conflicting MOIs). In some examples, analysis engine 240 is configured to determine whether requests for performance jobs for one or more O-RAN managed elements performed using the O1 interface or one or more resources of the O-RAN cloud performed using the O2 interface would cause a conflict (e.g., overlapping interoperability compliances (IOCs) and attributes, contradicts attribute value changes, specify different data networks, etc.). In some examples, analysis engine 240 is configured to determine whether requests to manage services performed using the R1 interface would cause a conflict (e.g., conflict with previously registered services or previously implemented application).

In response to determining that the service has a conflict, action engine 242 is configured to address the determined conflict. For example, action engine 242 may implement the services based on one or more rules 129. In addition to, or alternatively to, the description above, rules 129 may include, for example, implementing a policy based on a first come, first served basis, implementing a policy from the application with a higher priority, implementing a policy based on scope of the policy, implementing a policy based on an IOC type or based on an IOC type and attribute of the IOC.

In some examples, a user may specify which of rules 129 to apply to address a conflict via UI module 286, or to add or modify rules 129. UI module 286 can generate data indicative of various user interface screens that graphically depict the conflict management rules UI module 286 can output, e.g., for display by a separate display device, the data indicative of the various user interface screens. UI module 286 can also output, for display, data indicative of graphical user interface elements that solicit input. Input may be, for example, a conflict management rule to be applied to a particular service, queries, or other input.

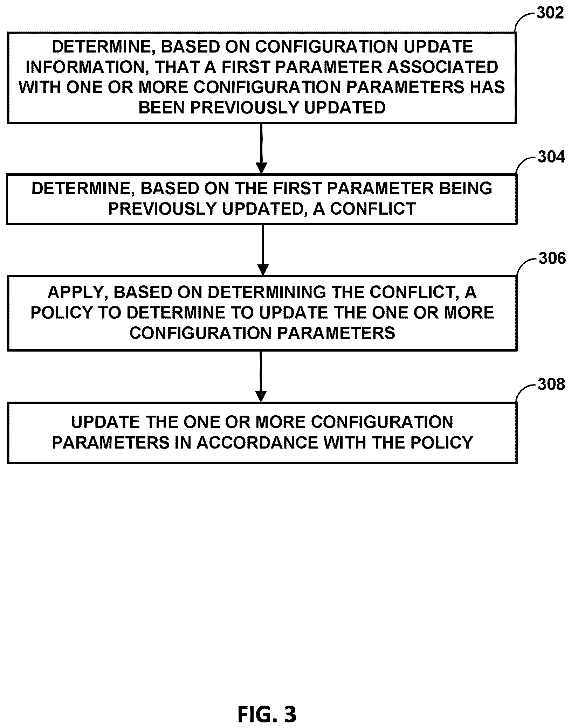

FIG. 3 is a flow diagram illustrating example conflict management techniques according to one or more aspects of this disclosure. In some examples, conflict manager 121 may obtain configuration update information. For example, conflict manager 121 may read the configuration update information from signals database 131, or receive the configuration update information from message bus 151, R1 termination 152, O1 termination 168, O2 termination 169, A1 termination 156, UI 286, etc. The configuration update information may include one or more configuration parameters and be indicative of a change in the one or more configuration parameters by an rApp (e.g., of applications 123). For example, the configuration update information may include information about a configuration update that an rApp is attempting to make.

Conflict manager 121 may determine, based on the configuration update information, that a first parameter associated with the one or more configuration parameters has been previously updated (302). For example, conflict manager 121 may look up a parameter of the one or more parameters of the configuration update information (which may be indicative of a direct conflict) and/or a parameter that may be associated with the one or more parameters (which may be indicative of an indirect or implicit conflict) in signals database 131 to determine whether the parameter has been previously updated. In some examples, this determination may be timebound such that previous means updated within a particular period of time and does not mean ever been updated.

Conflict manager 121 may determine, based on the first parameter being previously updated, a conflict (304). For example, conflict manager 121 may determine that a direct conflict, an indirect conflict, and/or an implicit conflict exists based on the first parameter being previously updated.

Conflict manager 121 may apply, based on determining the conflict, a policy to determine to update the one or more configuration parameters (306). For example, conflict manager 121 may apply a policy to determine whether to update the one or more configuration parameters and determine, based on the policy, that the one or more configuration parameter should be updated.

Conflict manager 121 may update the one or more configuration parameters in accordance with the policy (308). For example, conflict manager 121 may apply a policy and update (or not update) the one or more configuration parameters in accordance with the policy.

In some examples, the policy includes an operator conflict management policy. In some examples, conflict manager 121 is configured to obtain the configuration update information via a configuration update subscription service. In some examples, the configuration update subscription service and corresponding notification service operates according to at least one of an Open-RAN or 3GPP standard.

In some examples, to determine that the first parameter has been previously updated, conflict manager 121 is configured to determine that the first parameter has been previously updated within a time period for a same cell or base station. In other words, the first parameter was updated for the same cell or base station as would be affected by a change associated with the configuration update information within the time period. In some examples, the time period includes a user definable time period or a time period determined by one or more artificial intelligence or machine learning models. In such examples, "previous" would be timebound by the time period. For example, conflict manager 121 may determine that the first parameter was updated within the time period (e.g., within the last 24 hours), and not whether the first parameter was ever updated. In some examples, to determine that the first parameter has been previously updated within the time period, the conflict manager is configured to look up a change to the first parameter in the storage media (e.g., signals database 131).

In some examples, computing system 200 includes one or more processors 220. In some examples, conflict manager 121 is further configured to: determine that the configuration update information is associated with a proposed configuration update from an application of the RIC; and apply, based on the proposed configuration update being from the application of the RIC, the policy.

In some examples, the configuration update information is first configuration update information. In some examples, the one or more configuration parameters are first one or more configuration parameters. In some examples, the conflict is a first conflict. In some examples, conflict manager 121 is configured to determine, based on second configuration update information, that a second parameter associated with the second one or more configuration parameters has been previously updated, the second configuration update information comprising second one or more configuration parameters and being indicative of a change in the second one or more configuration parameters by a non-O-RAN computing system (e.g., RAN optimization system 115). In some examples, conflict manager 121 is configured to determine, based on the second parameter being previously updated, a second conflict. In some examples, conflict manager 121 is configured to send, based on determining the second conflict (e.g., determining that the second conflict exists and is associated with a proposed configuration update that is from the non-O-RAN computing system), a notification to the non-O-RAN computing system that the configuration update information is indicative of the second conflict.

In some examples, the second configuration update information includes information about a proposed configuration update. In some examples, the notification includes conflict guidance. In some examples, the non-O-RAN computing system (e.g., RAN optimization system 115) includes a centralized self-organizing network (C-SON) or a distributed self-organizing network (D-SON).

In some examples, conflict manager 121 is configured to obtain the second configuration update information via a configuration update subscription service, a vendor specific application programming interface (API), or a user interface (UI). In some examples, the configuration update subscription service and a corresponding notification service operates according to at least one of Open-RAN or 3GPP standards.

Thus, from one perspective, there has now been described an example computing system which includes a Radio Access Network (RAN) Intelligent Controller (RIC). The RIC includes storage media configured to store configuration update information. The configuration update information includes one or more configuration parameters and is indicative of a change in the one or more configuration parameters by an application of the RIC. The RIC includes a conflict manager. The conflict manager is configured to determine, based on the configuration update information that a first parameter associated with the one or more configuration parameters has been previously updated. The conflict manager is configured to determine, based on the first parameter being previously updated, a conflict. The conflict manager is configured to apply, based on determining the conflict, a policy to determine to update the one or more configuration parameters and update the one or more configuration parameters in accordance with the policy.

The techniques described in this disclosure may be implemented, at least in part, in hardware, software, firmware or any combination thereof. For example, various aspects of the described techniques may be implemented within one or more programmable processors, including one or more microprocessors, digital signal processors (DSPs), application specific integrated circuits (ASICs), field programmable gate arrays (FPGAs), or any other equivalent integrated or discrete logic circuitry, as well as any combinations of such components. The term "processor" or "processing circuitry" may generally refer to any of the foregoing logic circuitry, alone or in combination with other logic circuitry, or any other equivalent circuitry. A control unit comprising hardware may also perform one or more of the techniques of this disclosure.

Such hardware, software, and firmware may be implemented within the same device or within separate devices to support the various operations and functions described in this disclosure. In addition, any of the described units, modules or components may be implemented together or separately as discrete but interoperable logic devices. Depiction of different features as modules or units is intended to highlight different functional aspects and does not necessarily imply that such modules or units must be realized by separate hardware or software components. Rather, functionality associated with one or more modules or units may be performed by separate hardware or software components or integrated within common or separate hardware or software components.

The techniques described in this disclosure may also be embodied or encoded in a computer-readable medium, such as a computer-readable storage medium, containing instructions. Instructions embedded or encoded in a computer-readable medium may cause a programmable processor, or other processor, to perform the method, e.g., when the instructions are executed. Computer-readable media may include non-transitory computer-readable storage media and transient communication media. Computer readable storage media, which is tangible and non-transitory, may include random access memory (RAM), read only memory (ROM), programmable read only memory (PROM), erasable programmable read only memory (EPROM), electronically erasable programmable read only memory (EEPROM), flash memory, a hard disk, a CD-ROM, a floppy disk, a cassette, magnetic media, optical media, or other computer-readable storage media. The term "computer-readable storage media" refers to physical storage media, and not signals, carrier waves, or other transient media.

Further examples of feature combinations taught by the present disclosure are set out in the following numbered clause:
1. A computing system comprising:
   a Radio Access Network (RAN) Intelligent Controller (RIC) to manage a RAN, the RIC comprising:
   storage media configured to store configuration update information, the configuration update information comprising one or more configuration parameters and being indicative of a change in the one or more configuration parameters by an application of the RIC; and
   a conflict manager configured to:
      determine, based on the configuration update information, that a first parameter associated with the one or more configuration parameters has been previously updated by a non-O-RAN computing system;
      determine, based on the first parameter being previously updated, a conflict;
      apply, based on determining the conflict, a policy to determine to update the one or more configuration parameters; and
      update the one or more configuration parameters in accordance with the policy.
2. The computing system of clause 1, wherein the policy comprises an operator conflict management policy.
3. The computing system of clause 1 or clause 2, wherein the conflict manager is configured to obtain the configuration update information via a configuration update subscription service.
4. The computing system of clause 3, wherein the configuration update subscription service and a corresponding notification service operates according to at least one of Open-RAN or 3GPP standards.
5. The computing system of any preceding clause, wherein to determine that the first parameter has been previously updated, the conflict manager is configured to determine that the first parameter has been previously updated within a time period for a same cell or base station, and wherein the time period comprises a user definable time period or a time period determined by one or more artificial intelligence or machine learning models.
6. The computing system of clause 5, wherein to determine that the first parameter has been previously updated within the time period, the conflict manager is configured to look up a change to the first parameter in the storage media.
7. The computing system of any preceding clause, wherein the conflict manager is further configured to:
   determine that the configuration update information is associated with a proposed configuration update from the application of the RIC; and
   apply, based on the proposed configuration update being from the application of the RIC, the policy.
8. The computing system of any preceding clause, wherein the configuration update information is first configuration update information, the one or more configuration parameters are first one or more configuration parameters, and the conflict is a first conflict, and wherein the conflict manager is further configured to:
   determine, based on second configuration update information, that a second parameter associated with second one or more configuration parameters has been previously updated, the second configuration update information comprising second one or more configuration parameters and being indicative of a change in the second one or more configuration parameters by a non-O-RAN computing system;
   determine, based on the second parameter being previously updated, a second conflict; and
   send, based on determining the second conflict, a notification to the non-O-RAN computing system that the configuration update information is indicative of the second conflict.
9. The computing system of clause 8, wherein the second configuration update information comprises information about a proposed configuration update, and wherein the notification comprises conflict guidance.
10. The computing system of clause 8 or clause 9, wherein the non-O-RAN computing system comprises a centralized self-organizing network (C-SON) or a distributed self-organizing network (D-SON).
11. The computing system of any of clauses 8 to 10, wherein the conflict manager is configured to obtain the second configuration update information via a configuration update subscription service, a vendor specific application programming interface (API), or a user interface (UI).
12. The computing system of clause 11, wherein the configuration update subscription service and a corresponding notification service operates according to at least one of Open-RAN or 3GPP standards.
13. A method comprising:
   determining, by a Radio Access Network (RAN) Intelligent Controller (RIC), based on configuration update information, that a first parameter associated with one or more configuration parameters has been previously updated, the configuration update information comprising the one or more configuration parameters and being indicative of a change in the one or more configuration parameters by an application of the RIC;
   determining, by the RIC and based on the first parameter being previously updated, a conflict;
   applying, by the RIC and based on determining the conflict, a policy to determine to update the one or more configuration parameters; and
   updating, by the RIC, the one or more configuration parameters in accordance with the policy.
14. The method of clause 13, wherein the policy comprises an operator conflict management policy.
15. The method of clause 13 or clause 14, wherein obtaining the configuration update information comprises obtaining the configuration update information via a configuration update subscription service.
16. The method of clause 15, wherein the configuration update subscription service and corresponding notification service operates according to at least one of Open-RAN or 3GPP standards.
17. The method of any of clauses 13 to 16, wherein determining that the first parameter has been previously updated comprises determining that the first parameter has been previously updated within a time period for a same cell or base station, and wherein the time period comprises a user definable time period or a time period determined by one or more artificial intelligence or machine learning models.
18. The method of any of clauses 13 to 17, further comprising:
   determining that the configuration update information is associated with a proposed configuration update from the application of the RIC; and
   applying, based on the proposed configuration update being from the application of the RIC, the policy.
19. The method of any of clauses 13 to 18, wherein the configuration update information is first configuration update information, the one or more configuration parameters are first one or more configuration parameters, and the conflict is a first conflict, and wherein the method further comprises:
   determining, by the RIC, based on second configuration update information, that a second parameter associated with second one or more configuration parameters has been previously updated, the second configuration update information comprising the second one or more configuration parameters and being indicative of a change in the second one or more configuration parameters by a non-O-RAN computing system;
   determining, by the RIC and based on the second parameter being previously updated, a second conflict; and
   sending, by the RIC and based on determining the second conflict, a notification to the non-O-RAN computing system that the configuration update information is indicative of the second conflict.
20. Computer-readable media comprising instructions that, when executed, cause processing circuitry to:
   determine, based on configuration update information, that a first parameter associated with one or more configuration parameters has been previously updated, the configuration update information comprising the one or more configuration parameters and being indicative of a change in the one or more configuration parameters by an application of a Radio Access Network (RAN) Intelligent Controller (RIC);
   determine, based on the first parameter being previously updated, a conflict;
   apply, based on determining the conflict, a policy to determine to update the one or more configuration parameters; and
   update the one or more configuration parameters in accordance with the policy.

## Claims

1. A computing system comprising:
a Radio Access Network, RAN, Intelligent Controller, RIC, to manage a RAN, the RIC comprising:
storage media configured to store configuration update information, the configuration update information comprising one or more configuration parameters and being indicative of a change in the one or more configuration parameters by an application of the RIC; and
a conflict manager configured to:
determine, based on the configuration update information, that a first parameter associated with the one or more configuration parameters has been previously updated by a non-O-RAN computing system;
determine, based on the first parameter being previously updated, a conflict;
apply, based on determining the conflict, a policy to determine to update the one or more configuration parameters; and
update the one or more configuration parameters in accordance with the policy.

2. The computing system of claim 1, wherein the policy comprises an operator conflict management policy.

3. The computing system of any of claims 1-2, wherein the conflict manager is configured to obtain the configuration update information via a configuration update subscription service.

4. The computing system of claim 3, wherein the configuration update subscription service and a corresponding notification service operates according to at least one of Open-RAN or 3GPP standards.

5. The computing system of any of claims 1-4, wherein to determine that the first parameter has been previously updated, the conflict manager is configured to determine that the first parameter has been previously updated within a time period for a same cell or base station, and wherein the time period comprises a user definable time period or a time period determined by one or more artificial intelligence or machine learning models.

6. The computing system of claim 5, wherein to determine that the first parameter has been previously updated within the time period, the conflict manager is configured to look up a change to the first parameter in the storage media.

7. The computing system of any of claims 1-6, wherein the conflict manager is further configured to:
determine that the configuration update information is associated with a proposed configuration update from the application of the RIC; and
apply, based on the proposed configuration update being from the application of the RIC, the policy.

8. The computing system of any of claims 1-7, wherein the configuration update information is first configuration update information, the one or more configuration parameters are first one or more configuration parameters, and the conflict is a first conflict, and wherein the conflict manager is further configured to:
determine, based on second configuration update information, that a second parameter associated with second one or more configuration parameters has been previously updated, the second configuration update information comprising second one or more configuration parameters and being indicative of a change in the second one or more configuration parameters by a non-O-RAN computing system;
determine, based on the second parameter being previously updated, a second conflict; and
send, based on determining the second conflict, a notification to the non-O-RAN computing system that the configuration update information is indicative of the second conflict.

9. The computing system of claim 8, wherein the second configuration update information comprises information about a proposed configuration update, and wherein the notification comprises conflict guidance.

10. The computing system of any of claims 8-9, wherein the non-O-RAN computing system comprises a centralized self-organizing network (C-SON) or a distributed self-organizing network (D-SON).

11. The computing system of any of claims 8-10, wherein the conflict manager is configured to obtain the second configuration update information via a configuration update subscription service, a vendor specific application programming interface (API), or a user interface (UI).

12. The computing system of claim 11, wherein the configuration update subscription service and a corresponding notification service operates according to at least one of Open-RAN or 3GPP standards.

13. A method comprising:
determining, by a Radio Access Network, RAN, Intelligent Controller, RIC, based on configuration update information, that a first parameter associated with one or more configuration parameters has been previously updated, the configuration update information comprising the one or more configuration parameters and being indicative of a change in the one or more configuration parameters by an application of the RIC;
determining, by the RIC and based on the first parameter being previously updated, a conflict;
applying, by the RIC and based on determining the conflict, a policy to determine to update the one or more configuration parameters; and
updating, by the RIC, the one or more configuration parameters in accordance with the policy.

14. The method of claim 13, further comprising:
performing, by the RIC, the steps recited in any of claims 2-12.

15. A computer-readable storage medium encoded with instructions for causing one or more programmable processors to perform the method recited by any of claims 13-14.
